# EUROPEAN PATENT APPLICATION

(11) **EP 4 375 702 A1**
(43) Date of publication of application: **29.05.2024**
(21) Application number: 22209091.2
(22) Date of filing: 23.11.2022
(51) Int. Cl.: G01S 7/481, G01S 7/4912, G01S 7/499, G01S 17/34, G01S 17/42, G01S 17/89, G01S 17/931

(54) **DEVICE FOR SCANNING FMCW LIDAR RANGE MEASUREMENT**

(71) Applicant: Scantinel Photonics GmbH, 89077 Ulm (DE)
(72) Inventor: Davydenko, Vladimir, 76332 Bad Herrenalb (DE)
(74) Representative: Ostertag & Partner Patentanwälte mbB

(57) **Abstract**

A device (14) for scanning FMCW LiDAR range measurement has a light source (16) that produces output light having a varying frequency. A distribution matrix (27) distributes the output light among a plurality of output couplers (OC1 to OC4) that emit the outgoing light into free space as outgoing light beam (381). A plurality of input couplers (IC1 to IC4) (IC1 to IC4) couple return light beams (421), which are formed by a portion of the outgoing light beams (381) that are reflected at an object (12), back into the device (14). A detector (32) detects a superposition of the return light beam (421) with reference light that was not reflected at the object (12). A calculation unit (34) determines the range to the object (12) from this superposition. In each pair of associated input and output couplers the input coupler (IC1 to IC4) and the output coupler (OC1 to OC4) are arranged such that there is a coaxial beam path section along which both the outgoing light beam (381) and the return light beam (421) propagate coaxially.

## Description

### BACKGROUND OF THE INVENTION

### 1. Field of the Invention

The invention relates to a device for scanning range - and preferably also velocity - measurement relative to a moving or unmoving object on the basis of FMCW LiDAR technology. Such devices can be used, for example, in autonomously driving vehicles and may be implemented - at least to some extent - as photonic integrated circuits (PIC) that do not contain any moving parts.

### 2. Description of the Prior Art

Frequency-modulated continuous wave (FMCW) is a range and velocity measuring technology which was originally developed for RADAR applications. If light instead of radio waves are used, this technology is usually referred to as FMCW LiDAR, in which LiDAR is an acronym for "Light Detection And Ranging".

In FMCW LiDAR scanning devices, frequency-modulated light beams scan the environment. A small fraction of the light, which is diffusely reflected at an object, is received and superimposed with a local oscillator wave. The frequency difference between the two signals, which is usually referred to as beat frequency, is measured and used to compute the range of the object. By using a tunable laser as light source and a photodiode as detector, the beat frequency can be extracted directly from the photodiode current, because the photodiode delivers a current that is proportional to the squared sum of the two optical waves ("self-mixing effect"). If the Doppler shift is taken into account, the relative velocity between the scanning device and the object along the light propagation direction can be calculated, too.

Scanning devices based on this measurement principle have to be very robust and reliable if they are to be used in vehicles. This is true in particular if the vehicles drive autonomously, since the safety in autonomous driving decisively depends on the scanning device that is used to generate a three-dimensional profile of the environment. Scanning devices which are implemented as photonic integrated circuits (PIC) do not require moving components and are therefore particularly suitable for applications in vehicles.

Such PIC implemented scanning devices are disclosed, for example, in WO 2021/239408 A1. These devices include a distribution matrix comprising a plurality of optical switches that are arranged in a tree-like manner. The distribution matrix distributes the optical signals among different free space couplers that emit the optical signal into free space. The free space couplers are arranged in a front focal plane of a collimating optical system that directs the optical signals optical waveguides into various directions. Return light, which has been reflected at the object to be detected, enters the same free space coupler from which it was previously emitted, and propagates along the same optical waveguide within the PIC until it is split off and directed towards the photodiode. Such setups, in which there is only one aperture through which both the outgoing light and the return light pass, are referred to as monostatic.

In a bistatic setup, there are different free space couplers, or generally apertures, for the outgoing and the return light. LiDAR devices with a bistatic setup are described, for example, in US 2021/0316756 A1.

Both types of setups have their advantages and disadvantages. Monostatic setups are attractive because of the reduced number of building blocks, as there is only one set of couplers that transmit and receive light. However, splitting off the return light requires considerable efforts, as the return light is very weak so that light losses must be kept at a minimum. Optical circulators may be used to this end, but such devices are difficult to integrate into a PIC. A better approach is to use polarization splitter-rotators as those disclosed in US 10,983,200 B1. But even these components are technically sophisticated, lead to complex wafer structures and require high precision fabrication processes.

Bistatic setups do not require any components that separate the outgoing and the return light. A major drawback of bistatic setups is that the photodiode generally receives less return light than in monostatic setups. Usually the strongest return signal is the one that is retro-reflected at the object. This implies that the intensity of the return light is maximum at the free space coupler that emitted the outgoing light. Even at a small distance away from this free space coupler, the intensity of the return signal decreases.

### SUMMARY OF THE INVENTION

It is an object of the present invention to provide a device for scanning range measurement that combines the advantages of monostatic and bistatic setups in that it allows simple PIC layouts while ensuring maximum usage of the return light.

In accordance with the present invention this object is achieved by a device for scanning FMCW LiDAR range measurement that comprises a light source configured to produce output light having a varying frequency. A distribution matrix is configured to distribute the output light among a plurality of output couplers, wherein each output coupler is configured to emit the outgoing light into free space as outgoing light beam. The device further comprises a plurality of input couplers that are distinct from the output couplers. Each input coupler is configured to couple a return light beam, which is formed by a portion of the outgoing light beam that was reflected at an object, back into the device. A detector is configured to detect a superposition of the return light beam coupled into the device with reference light that was not reflected at the object. A calculation unit is configured to determine the range to the object from the superposition detected by the detector. In each pair of associated input and output couplers the input coupler and the output coupler are arranged such that there is a coaxial beam path section along which both the outgoing light beam and the return light beam propagate coaxially.

The invention is based on the insight that the crucial point for receiving high return light intensities is not using the same coupler or aperture for the outgoing and the return light, but being able to receive a return light beam that propagates coaxially with the outgoing beam. Such a return light beam usually includes the retro-reflected portion of the return light and also some of the light that has not been retro-reflected. In monostatic setups, the coupler or aperture that emits the outgoing light automatically receives the retro-reflected light, while in bistatic setups an input coupler receives only the portion of the return light that was not exactly retro-reflected. The inventor found out that by certain measures, for example by exploiting the different properties (for example divergence) of the outgoing and the return light beam and/or by separating the return light beam from the outgoing light beam before the return light beam enters an optical waveguide, the input coupler of a bistatic setup may receive significantly more of the return light that was not retro-reflected, or even the retro-reflected portion, too.

If, in the context of the present invention, the outgoing light beam and the return light beam are said to propagate coaxially, this means that the energetic centroid ray, which usually coincides in these applications with the geometric centroid ray, of the output beam coincides with the energetic centroid ray of the return beam. Therefore, the beams may have different dimensions (and the return light beam is usually broader), but they symmetrically overlap. Per definition, the centroid ray of the output beam emerges from an output coupler, and the centroid ray of a return beam enters an input coupler.

Providing input couplers that are distinct from the output couplers makes it possible to adapt the couplers to the properties of the light beams that shall be emitted and received, respectively. For example, the outgoing light beam should usually have a large numerical aperture NA₁, because only then it is possible to achieve a sufficiently large beam diameter and field of view (FoV). A large NA₁ implies a small mode field diameter of the optical waveguide that supplies the output light to the output coupler.

The return light beam, however, should have a smaller numerical aperture NA₂, because this implies a larger mode field diameter and thus an improved coupling efficiency for the weak return light. Therefore, it is preferred if the output couplers have a first numerical aperture NA₁ and the input couplers have a second numerical aperture NA₂ which is smaller than the first numerical aperture NA₁.

Since the return light beam usually has a larger divergence than the outgoing light beam, it may be advantageous to provide a positive micro-lens that is arranged in a beam path of each input coupler. This micro-lens adapts the large numerical aperture of the return light to the smaller numerical aperture of the input coupler. Such a setup makes it possible to have output couplers with a first mode field diameter MFD₁ and input couplers with a second mode field diameter MFD₂ which is greater than the first mode field diameter MFD₁.

In an embodiment pairs of associated input and output couplers are arranged one behind the other on an axis along which both the outgoing light beam and the return light beam propagate coaxially. In such an embodiment the retro-reflected return light will enter the output coupler and cannot be used for detection, but a large portion of the return light that was not retro-reflected will be collected by the associated input coupler.

Typically, the scanning devices comprise a collimating optical system having a front focal plane in which the output couplers are arranged. The output coupler of each pair of associated input and output couplers may then be arranged between the input coupler of the pair and the collimating optical system.

By using a coaxial beam path, it is possible to arrange, in each pair of associated input and output couplers, the input coupler and the output coupler at optically conjugate positions. Optically conjugate in this context means that the positions are optically equivalent, i.e. light that is focused at one position will also be focused on the equivalent position in the absence of any light splitting means. With light splitting, the conjugate positions make it possible for the input couplers to collect also the return light that was retro-reflected at the object.

Light splitting may be achieved by using polarization control. For example, the device may comprise a polarization dependent beam splitter surface that is arranged at one end of the coaxial beam path section of each pair of associated input and output couplers. The beam splitter surface is configured to direct the outgoing light beam of the respective pair towards the coaxial beam path section and to direct the return light beam from the coaxial beam path section towards the input coupler of the respective pair of associated input and output couplers.

The polarization dependent beam splitter surface may be common to all pairs of associated input and output couplers. However, in principle there may be a plurality of distinct beam splitter surfaces that are individually associated to the input/output coupler pairs (optical channels).

In such embodiments the return light beams or the outgoing light beams may impinge twice on the polarization dependent beam splitter surface, and all output couplers and input couplers are arranged in a common plane. Such a configuration is particularly easy to realize as a PIC assembly having small dimensions and allowing easy packaging.

### BRIEF DESCRIPTION OF THE DRAWINGS

Various features and advantages of the present invention may be more readily understood with reference to the following detailed description taken in conjunction with the accompanying drawings in which:
- Figure 1: is a schematic side view of a vehicle approaching an object which is detected by a scanning device according to the invention;
- Figure 2: is a top view of the scanning device shown in Figure 1;
- Figure 3: schematically shows the basic design of an FMCW LiDAR scanning device according to the prior art;
- Figure 4: is a graph illustrating the time dependency of the frequency of the light emitted by a light source that is contained in the scanning device of Figure 3;
- Figure 5: schematically shows important components of a scanning device according to a first embodiment of the invention in which pairs of associated input and output couplers are arranged one behind the other on an axis;
- Figure 6: illustrates how the components shown in Figure 5 can be implemented in a PIC assembly;
- Figure 7: schematically shows important component of a scanning device according to a second embodiment of the invention in which a polarization dependent beam splitter surface is arranged at one end of the coaxial beam path section;
- Figure 8: illustrates how the components shown in Figure 7 can be implemented in a PIC assembly.

### DETAILED DESCRIPTION OF PREFERRED EMBODIMENTS

### 1. Application scenario

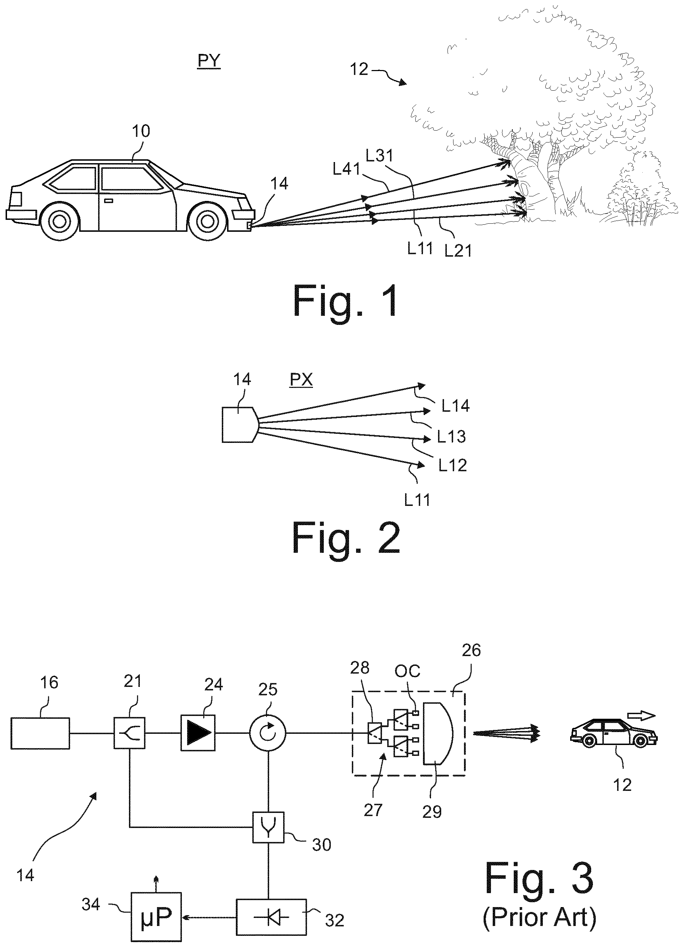

Figure 1 is a schematic side view of a vehicle 10 approaching an object 12 that is represented by a tree. The vehicle 10 has at least one scanning device 14 that uses outgoing light beams L11, L21, L31 and L41 to scan the environment ahead of the vehicle 10. From the distance information generated by the scanning device 14 a three-dimensional image of the environment can be calculated. In addition, the scanning device 14 determines the relative speed to the object 12. This information is particularly important if the object 12 is another vehicle, an animal or a pedestrian that is also moving.

As can be seen in Figure 1, the scanning device 14 emits outgoing light beams L11 to L41 in different directions in a vertical plane PY in order to scan the environment in a vertical direction. Scanning takes place also in several horizontal planes PX, as this is shown in Figure 2 which is a top view on the scanning device 14. Four outgoing light beams L11, L12, L13 and L14 are shown which are emitted in different directions in a horizontal plane.

For reasons of clarity, it is assumed in Figures 1 and 2 that in each of k=4 different planes, four outgoing light beams Lk1 to Lk4 - i.e. a total of 16 light beams - are generated by the scanning device 14. However, in reality the scanning device 14 emits significantly more outgoing light beams. For example, k·2ⁿ light beams are preferred, where n is a natural number between 7 and 13 and indicates how many beams are emitted in one of k planes, where k is a natural number between 1 and 16. In some embodiments, more than one light beam is emitted at a given time in order to achieve the desired spatial and temporal resolution.

### 2. Scanning Device

Figure 3 schematically shows the basic design of a prior art FMCW scanning device 14. The scanning device 14 is designed as a LiDAR system and comprises an FMCW light source 16 which generates measuring light.

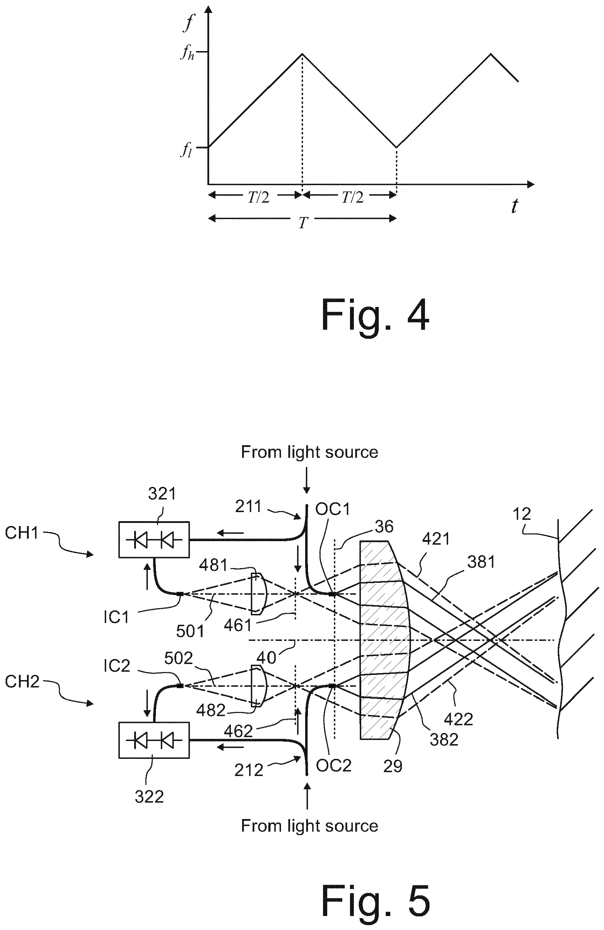

As illustrated in Figure 4, the measuring light has a frequency *f* that varies ("chirps") periodically over time *t* between a lower frequency *fₗ* and a higher frequency *fₕ.* Each measurement interval with a chirp duration T is divided into two halves of equal length T/2. During the first interval the frequency ***ƒ*** increases linearly with a constant and positive upchirp rate *r_{chirp} = df*/*dt.* During the second interval, the frequency ***ƒ*** decreases linearly with a constant negative downchirp rate *-r_{chirp}.* The frequency of the measured light can thus be described by a periodic triangular function. However, other functional relationships are also contemplated, e.g. sawtooth functions.

Referring again to Figure 3, the light source 16 is connected to a splitter 21 that splits the measuring light into reference light (also referred to as local oscillator or LO) and output light. In the illustrated embodiment, the output light is amplified by an optical amplifier 24. The amplified output light then propagates, via a light amplifier 24 and an optical circulator 25, to a scanning unit 26. The scanning unit 26 contains a distribution matrix 27 comprising a plurality of optical switches 28 that are arranged in a tree-like manner and can be individually controlled, a plurality of output couplers OC, a collimating optical system 29 having a front focal plane in which the output couplers OC are arranged, and optionally a mechanical scanner for scanning in the vertical direction (not shown), as this in known in the art as such.

The outgoing light beams emitted by the scanning unit 26 are at least partially diffusely reflected at the object 12 which is represented in Figure 3 by a moving car. A small fraction of the reflected light returns to the scanning unit 26 as a return light beam, where it is re-coupled into the output coupler OC from which the associated outgoing light beam had been emitted. The optical circulator 25 directs the received return light towards a combiner 30 where the return light is superimposed with the reference light that has been separated from the measurement light by the splitter 21. Since the frequencies of the superimposed light components are slightly different due to the different optical path lengths, a beat signal is generated which is detected by a photodiode or another type of detector 32. The electrical signals generated by the detector 32 are fed to a calculation unit 34 that calculates the distance R and the relative radial velocity *v* to the object 12 on the basis of the detected beat frequencies.

With the exception of the optical circulator 25, the collimating optical system 29 and the optional mechanical scanner, all optical components shown in Figure 3 are arranged on a common photonic substrate, thereby forming a photonic integrated circuit (PIC). However, it may also be envisaged to form groups of components on different substrates, or to have only some of these components integrated in the PIC, while others are connected to the PIC via an optical fiber.

### 3. First embodiment

Figure 5 shows some of the components of a scanning device 14 according to a first embodiment in a schematic representation. Only two optical channels CH1, CH2 are shown in Figure 5; in a real system the number of optical channels is usually much higher, as this has been explained above with reference to Figures 1 and 2.

The first optical channel CH1 comprises an output coupler OC1 and an input coupler IC1 that is distinct from the output coupler OC1. The scanning device 14 therefore has a bistatic setup. The output coupler OC1 is connected, via a splitter 211 and a distribution matrix as shown in Figure 3, to the light source 16 and may be configured as an edge coupler or a grating coupler, for example. The splitter 211 splits off a small portion of the light that was produced by the light source 16. This portion forms reference light that is guided towards the detector 321.

The outgoing light beam 381 emerges from the output coupler OC1 with a numerical aperture NA₁ that depends on the mode field diameter MFD₁ - and thus on the dimensions of the waveguide core - of the output coupler OC1. The output coupler OC1 is arranged in a front focal plane 36 of the collimating optical system 29. As a result, the outgoing light beam 381 is collimated when it leaves the collimating optical system 29, see solid lines in Figure 5. The direction along which the collimated outgoing light beam 381 leaves the scanning device 14 depends on the distance of the output coupler OC1 from an optical axis 40 of the collimating optical system 29. The larger this distance is, the greater will be the angle that the outgoing light beam 381 forms with the optical axis 40.

When the outgoing light beam 381 is incident on the object 12, a small fraction of the light is diffusely reflected and forms a return light beam. Due to the diffuse reflection, the return light beam usually has a larger divergence and thus a higher numerical aperture NAᵣ than the outgoing light beam 381. The retro-reflected portion of the return light beam 421 takes the same optical path as the outgoing light beam 381 back to the scanning device 14 and is therefore focused by the collimating optical system 29 on the output coupler OC1. This light portion is not guided towards the detector 321 and is thus lost for detection purposes.

However, the remaining portion of the return light beam 421 (see broken lines in Figure 5) that is not retro-reflected at the object 12 will be focused by the collimating optical system 29 in a focal plane 461 that is arranged at a distance from the front focal plane 36 of the collimating optical system 29. The focus in the focal plane 461 is imaged by a micro-lens 481 on the input coupler IC1 of the first channel CH1. Similar to the output coupler OC1, the input coupler IC1 may be configured as an edge or grating coupler, for example. The input coupler IC1 has smaller numerical aperture NA₂ then the output coupler OC1, which implies a mode field diameter MFD₂ > MFD₁. The micro-lens 481 is provided to adapt the numerical aperture NAᵣ of the return light beam 421 to the numerical aperture NA₂ of the input coupler IC1. Due to the large mode field diameter MFD₂, the input coupler IC1 has a very good coupling efficiency so that a large fraction of the return light beam 421 that is not retro-reflected at the object 12 is able to enter the waveguide that guides this portion of the return light to the detector 321 where it superimposes with the reference light.

As can be seen in Figure 5, the input coupler IC1 is arranged behind the output coupler OC1 on a common axis 501 along which both the outgoing light beam 381 and the return light beam 441 propagate coaxially. This ensures that no return light is lost due to the angle mismatch that is caused by a lateral offset between the output and the input couplers that is usually inevitable in bistatic setups. In the absence of mirrors, prisms or other beam folding optical elements, the common axis 501 is parallel to the optical axis 40 of the collimating optical system 29.

The second channel CH2 has the same structure as the first channel CH1 and is only laterally displaced with regard to the optical axis 40. The corresponding three-digit reference numerals used in Figure 5 have as a last digit a 2 instead of a 1.

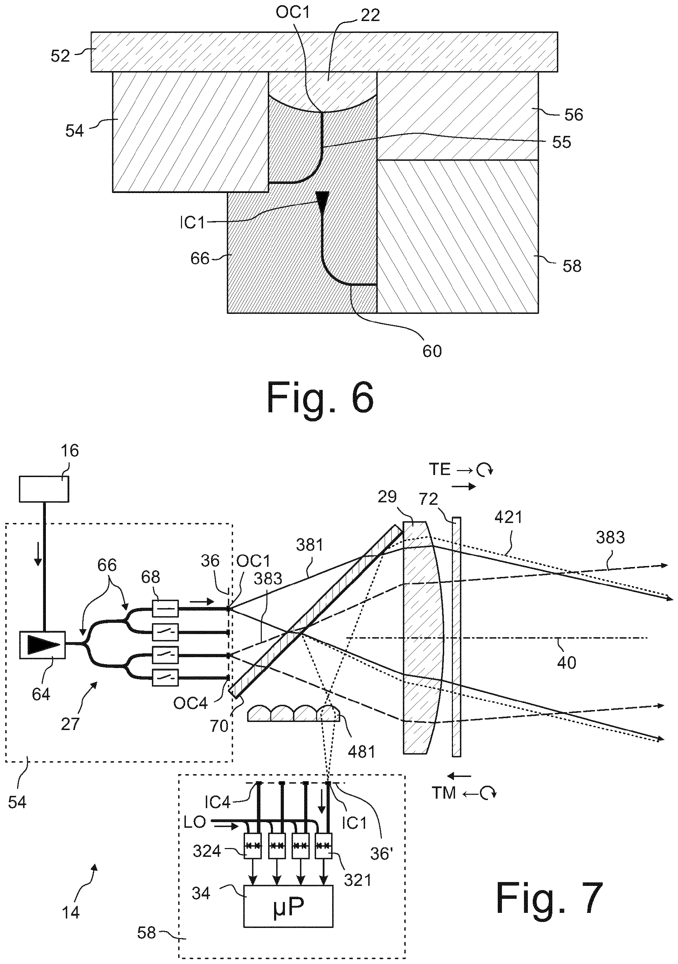

Figure 6 illustrates how the components shown in Figure 5 can be implemented in a PIC assembly. Figure 6 is a cross section through a portion of the scanning device 14 which extends perpendicular to the plane of the drawing sheet. In this cross section only the components forming the optical channel CH1 are visible; planes in which other optical channels CHn are formed run parallel to the plane of Figure 6.

The assembly comprises a glass window 52 that is transparent for the measuring light that typically has a wavelength of 1.55 µm. The window 52 serves a support for other components. Among these components is an output PIC 54 on which all elements in the light path between the light source 16 and a waveguide core 55 leading to the output coupler OC1 are implemented. The window 52 further supports, via an intermediate passive pedestal 56, an input PIC 58 on which all elements in the light path between a waveguide core 60, which is connected to the input coupler IC1, to the detector 321 are implemented. The waveguide cores 55, 60 are embedded in a low refractive index cladding 62. The input coupler IC1 is formed in this embodiment by a spot size converter (SSC) that increases the coupling efficiency. The pedestal 56 achieves the required axial distance between the output PIC 54 and the input PIC 58 that the design of Figure 5 requires.

The glass window 52 further supports the plano-convex micro-lens 481. Since the output coupler OC1 directly abuts on the micro-lens 481, the latter has no significant optical effect on the outgoing light beam 381, but the desired optical effect on the return light beam 421, as this has been explained above with reference to Figure 5.

It is to be understood that the output PIC 52 does not contain only the optical elements for the optical channel CH1, but also of the remaining n-1 optical channels, with n denoting the total number of optical channels. The same applies correspondingly for the input PIC 58. The micro-lenses 481 to 48n may be formed as a one-dimensional micro-lens array extending perpendicular to the plane of the drawing sheet.

### 4. Second embodiment

Figure 7 shows some of the components of a scanning device 14 according to a second embodiment in a schematic representation. Only four optical channels CH1 to CH4 are shown in Figure 5; in a real system the number of optical channels is usually much higher, as this has been explained above with reference to Figures 1 and 2.

The receiver PIC 54 in this embodiment comprises an optical amplifier 64 connecting the light source 16 to a distribution matrix 27 that is assembled from a plurality of passive optical waveguide splitters 66. Emission of measuring light can be individually controlled by on/off switches 68 in each optical channel CH1 to CH4. The on/off switches 68, which may be formed by thermo-optic Mach-Zehnder-Interferometers (MZI), for example, are connected to the output couplers OC1 to OC4. The latter are again arranged in the front focal plane 36 of the collimating optical system 29.

The outgoing light beam 381 emitted from the output coupler OC1 is in a linear TE state of polarization (SOP) and first passes a polarization dependent beam splitting surface 70 that is inclined by an angle of 45° with regard to the optical axis 40 of the collimating optical system 29. After being collimated by the collimating optical system 29, the outgoing light beam 381 passes a quarter-wave plate 72 that converts the TE SOP into a circular SOP. The return light beam 421 is still circularly polarized, but is converted by the quarter-wave plate 72 into a TM SOP. Due to the rotated SOP, the return light beam 421 is reflected by 90° when it impinges on the polarization dependent beam splitting surface 70.

As a result of the reflection by 90°, the return light beam 421 is directed towards the micro-lens 481 and then coupled, with adapted numerical aperture NA, into input coupler IC1 that is integrated in the input PIC 58 and arranged at a conjugate front focal plane 36' of the collimating optical system 29. The received return light is then guided towards a detector 321 and superimposed with reference light LO as described further above.

Also in this embodiment there is a coaxial beam path section along which both the outgoing light beam 381 and the return light beam 421 propagate coaxially. This section extends up to the polarization dependent beam splitter surface 70. The latter is common to all pairs of associated input and output couplers ICn and OCn. As a matter of course, each channel CH1 to CH4 may be provided with its own and separate beam splitting surface.

The main advantage of this embodiment is that the retro-reflected portion of the return light is not coupled into the output couplers OC1 to OC4 as in the previous embodiment, but completely into the input couplers IC1 to IC4. This is a result of the optically conjugate arrangement of the input couplers IC1 to IC4 and the output couplers OC1 to OC4. Being able to use both the retro-reflected portion and also the portion that was not retro-reflected ensures a very complete usage of the weak return light beam for detection purposes.

The optically conjugate arrangement is made possible by separating the return light beam 421 from the outgoing light beam 381 before the return light beam 421 enters an optical waveguide of a PIC. Separation, in turn, is achieved here by an appropriate polarization control. It is noted that there are many alternative approaches for separating the return light beam 421 from the outgoing light beam 381 outside a PIC.

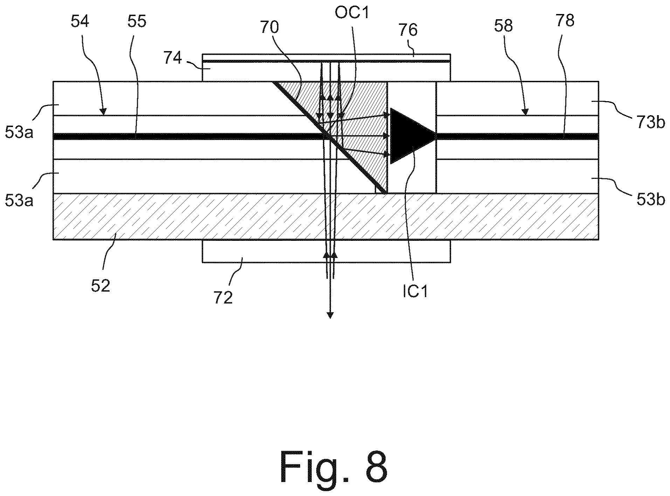

Figure 8 illustrates how the components shown in Figure 5 can be implemented in a PIC assembly. Figure 8 is a cross section through a portion of the scanning device 14 which extends perpendicular to the plane of the drawing sheet. In this cross section the components forming the optical channel CH1 are visible; planes in which other optical channels CHn are formed run parallel to the plane of Figure 8.

The PIC assembly comprises again a glass window 52 that supports on its outer side a quarter-wave plate 72 and on the opposite side a first support wafer 52a carrying an output PIC 54 and a second support wafer 52b carrying an input PIC 58. Instead of glass, the window 52 may be fabricated from silicon.

The output PIC 54 comprises an output optical waveguide core 55 that is connected to a distribution matrix (not shown). An end surface of the output PIC 54 is inclined and supports a layer forming a polarization dependent beam splitting surface 70. Reference numeral 73a denotes a cover layer arranged on top of the output PIC 54.

The input PIC 58 supports a cover 73b and has an input optical waveguide core 78 that is connected at one end to a micro spot size converter (SSC) forming the input coupler IC1.

The covers 73a, 73b support a further quarter-wave plate 74 to which a mirror 76 is attached.

Measuring light guided in the output optical waveguide 55 core is in a TE SOP, is reflected at the polarization dependent beam splitting surface 70 by 90° and passes through the quarter-wave plate 72. The circular SOP of the return light is converted into a TM SOP when it passes again through the quarter-wave plate 72 so that it is not reflected by the polarization dependent beam splitting surface 70. The return light, still in a TM SOP, thus propagates twice through the further quarter-wave plate 74 so that its SOP is converted in a TE SOP. The TE polarized return light is then reflected by 90° at the polarization dependent beam splitting surface 70 and enters the input coupler IC1.

It is to be understood that in this polarization control scheme the input and output PICs 54, 58 could also change their positions. Then the output light beam and not the input light beam would impinge twice on the polarization dependent beam splitting surface 70.

In this embodiment the return light beams or the outgoing light beams thus impinge twice on the polarization dependent beam splitter. This makes it possible to arrange all output couplers OCn and input couplers ICn in a common plane, which has significant advantages with a view to the overall device dimensions, packaging etc.

## Claims

1. A device (14) for scanning FMCW LiDAR range measurement, comprising
a light source (16) configured to produce output light having a varying frequency,
a distribution matrix (27) configured to distribute the output light among a plurality of output couplers (OC1 to OC4), wherein each output coupler is configured to emit the outgoing light into free space as outgoing light beam (381),
a plurality of input couplers (IC1 to IC4) that are distinct from the output couplers (OC1 to OC4), wherein each input coupler (IC1 to IC4) is configured to couple a return light beam (421), which is formed by a portion of the outgoing light beam (381) that was reflected at an object (12), back into the device (14),
a detector (32) configured to detect a superposition of the return light beam (421) coupled into the device (14) with reference light that was not reflected at the object (12),
a calculation unit (34) configured to determine the range to the object (12) from the superposition detected by the detector (32),
wherein
in each pair of associated input and output couplers the input coupler (IC1 to IC4) and the output coupler (OC1 to OC4) are arranged such that there is a coaxial beam path section along which both the outgoing light beam (381) and the return light beam (421) propagate coaxially.

2. The device of claim 1, wherein the output couplers (OC1 to OC4) have a first numerical aperture NA₁ and the input couplers (IC1 to IC4) have a second numerical aperture NA₂ which is smaller than the first numerical aperture NA₁.

3. The device of claim 2, wherein a positive micro-lens (481) is arranged in a beam path of each input coupler (IC1 to IC4).

4. The device of any of claims 1 to 3, wherein the output couplers (OC1 to OC4) have a first mode field diameter MFD₁ and the input couplers (IC1 to IC4) have a second mode field diameter MFD₂ which is greater than the first mode field diameter MFD₁.

5. The device of any of the preceding claims, wherein pairs of associated input and output couplers are arranged one behind the other on an axis along (501, 502) which both the outgoing light beam (381) and the return light beam (421) propagate coaxially.

6. The device of claim 5, comprising a collimating optical system (29) having an optical axis (40), wherein the output coupler (OC1 to OC4) of each pair of associated input and output couplers is arranged between the input coupler (IC1 to IC4) of the pair and the collimating optical system (29).

7. The device of any of claims 1 to 4, wherein in each pair of associated input and output couplers the input coupler (IC1 to IC4) and the output coupler (OC1 to OC4) are arranged at optically conjugate positions.

8. The device of claim 7, comprising a polarization dependent beam splitter surface (70) that is arranged at one end of the coaxial beam path section of each pair of associated input and output couplers and is configured to
- direct the outgoing light beam (381) of the respective pair towards the coaxial beam path section and to
- direct the return light beam (421) from the coaxial beam path section towards the input coupler (IC1 to IC4) of the respective pair of associated input and output couplers.

9. The device of claim 8, wherein the polarization dependent beam splitter surface (70) is common to all pairs of associated input and output couplers.

10. The device of any of claim 7 to 9, wherein the return light beams or the outgoing light beams impinge twice on the polarization dependent beam splitter surface (70), and wherein all output couplers (OC1 to OC4) and input couplers (IC1 to IC4) are arranged in a common plane.
